# EUROPEAN PATENT APPLICATION

(11) **EP 2 871 379 A1**
(43) Date of publication of application: **13.05.2015**
(21) Application number: 13817455.2
(22) Date of filing: 22.05.2013
(51) Int. Cl.: F16C 33/51

(54) **RETAINER FOR RADIAL ROLLER BEARING**

(30) Priority: 09.07.2012 JP 2012153871
(71) Applicant: NSK Ltd., Tokyo 141-8560 (JP)
(72) Inventor: ISHIBASHI Yutaka, Gunma 370-3344 (JP)
(74) Representative: Grünecker Patent- und Rechtsanwälte PartG mbB
(86) International application number: PCT/JP2013/064160
(87) International publication number: WO 2014/010311

(57) **Abstract**

Provided is a structure that can prevent excessive contact pressure at the rolling contact surfaces of rollers disposed in a pocket (21a) at a first circumferential end and in a pocket (22a) at the other circumferential end of a discontinuous portion (11b), and at the rolling contact portions of the tracks of the outer race and the inner race. An engaging portion (14a) for engaging, in a state of inhibited relative displacement in relation to the axial direction, a first circumferential end portion (12a) and the other circumferential end portion (13a) end of the discontinuous portion (11b) is constituted by a first asperity portion (15b) and a second asperity portion (16b). The first asperity portion (15b) is constituted by a first engaging protruding portion (17b) and a pair of first engaging recessed portions (18b, 18b). The second asperity portion (16b) is constituted by a pair of engaging protruding portions (19b, 19b) and a second engaging recessed portion (20b). An engaging portion-side pocket (23a) formed in the first engaging protruding portion (17b) passes through the first engaging protruding portion (17b) in a diametrical direction.

## Description

### TECHNICAL FIELD

The present invention relates to an improved radial roller (including needle) bearing retainer. The invention relates specifically to a radial roller bearing retainer having a discontinued portion at, at least, one location in a circumferential direction in which circumferential end portions that are provided so as to face each other across such a discontinued portion are brought into engagement with each other by an engagement portion. Then, by devising the construction of this engagement portion, surface contact pressures at rolling contact portions between rolling surfaces of rollers that are disposed in one circumferential end pocket and the other circumferential end pocket that are provided so as to face each other across the discontinued portion and outer ring and inner ring raceways are attempted to be prevented from being increased excessively.

### BACKGROUND ART

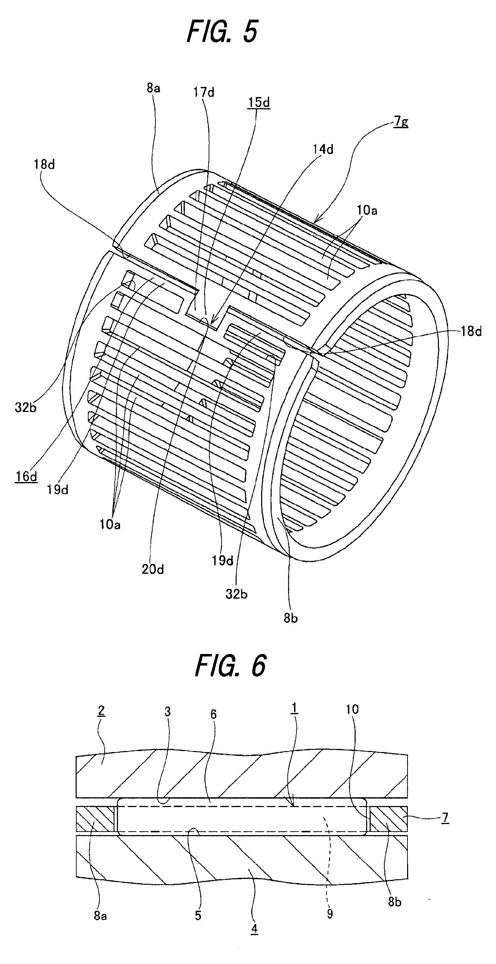

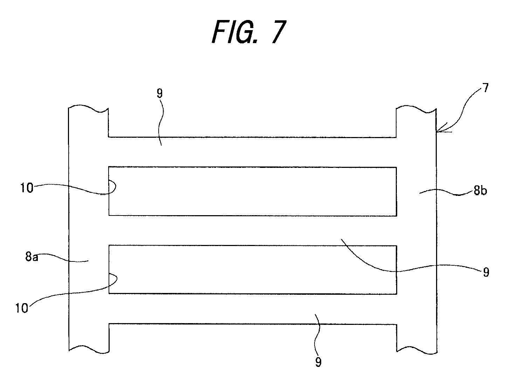

A radial roller bearing 1 as shown in Fig. 6 is incorporated in a portion of a rotational supporting portion of various mechanical apparatuses to which a large radial load is applied. In this radial roller bearing 1, a plurality of rollers (needles) 6 are provided so as to roll freely between an outer ring raceway 3 with a cylindrical surface that is provided on an inner circumferential surface of a radially outer member 2 such as a housing that does not rotate even in use (or a gearwheel or a roller that rotates in use) or the like and an inner ring raceway 5 with a cylindrical surface that is provided on an outer circumferential surface of a shaft 4 such as a rotational shaft (or a supporting shaft) or the like while being retained by a retainer 7 as shown in Figs. 6 to 7.

In these constituent parts of the radial roller bearing 1, the retainer 7 is fabricated integrally through injection molding using a synthetic resin and has a cylindrical shape as a whole. This retainer 7 includes a pair of rim portions 8a, 8b that each have a circular ring shape and that are disposed coaxially while being spaced away from each other in an axial direction and a plurality of pillar portions 9, 9 that are provided intermittently along the circumferential direction while being stretched between the pair of rim portions 8a, 8b. Portions that are surrounded around four sides by the pillar portions 9, 9 that lie adjacent in the circumferential direction and the pair of rim portions 8a, 8b are made as pockets 10, 10 where to retain the rollers 6 so as to roll freely therein. The retainer 7 configured as described above is provided between the inner circumferential surface of the radially outer member 2 and the outer circumferential surface of the shaft 4 so as to rotate freely relative to the radially outer member 2 and the shaft 4 with the rollers 6 retained in the pockets 10, 10 so as to roll freely therein. Therefore, the retainer 7 rotates relative to be radially outer member 2 and the shaft 4 with revolution of each the rollers.

In disposing the retainer 7 around the circumference of the inner ring raceway 5 to build up the radial roller bearing 1, the retainer 7 is placed on the shaft 4 from an end portion thereof and is further moved axially to the circumference of the inner ring raceway 5. As this occurs, however, in case an obstacle such as an outwardly oriented flange-like rib portion or the like with an outside diametric dimension that is larger than a bore dimension of the retainer 7 is present on the outer circumferential surface of the shaft 4 at a portion lying between the end portion of the shaft 4 and the inner ring raceway 5, this obstacle interrupts the passage of the retainer 7, whereby the retainer 7 cannot be moved axially to the circumference of the inner ring raceway 5.

Then, as a retainer that can solve the problem described above, for example, Patent Document 1 describes a retainer (a split retainer) in which a discontinued portion is provided at one location in a circumferential direction. Fig. 8 shows a retainer 7a that is described in Patent Document 1. In this retainer 7a, a discontinued portion 11 is provided at one location in the circumferential direction. Additionally, an axial relative displacement of end portions (one circumferential end portion 12 and the other circumferential end portion 13) that are provided to face each other across the discontinued portion 11 is restricted by bringing the end portions into engagement (recess and projection engagement) by an engagement portion 14.

To make this happen, the engagement portion 14 is made up of a first recess and projection portion 15 that is formed on the one circumferential end portion 12 and a second recess and projection portion 16 that is formed on the other circumferential end portion 13.

Of these recess and projection portions, the first recess and projection portion 15 is made up of a pair of first engaging projecting portions 17, 17 that are formed at portions on the one circumferential end portion 12 that lie closer to axial ends thereof so as to extend in a circumferential direction (towards the other circumferential end portion 13) and a first engaging recess portion 18 that is formed at an axial intermediate portion (a portion lying axially between the pair of first engaging projecting portions 17, 17) so as to recede in a circumferential direction (towards an opposite side to the other circumferential end portion 13).

On the other hand, the second recess and projection portion 16 is made up of a second engaging projecting portion 19 that is formed on the other circumferential end portion 13 at an axial intermediate portion so as to project in a circumferential direction (towards the one circumferential end portion 12) and a pair of second engaging recess portions 20, 20 at portions that lie closer to axial ends thereof (at both axial sides of the second engaging projecting portion 19) so as to recede in a circumferential direction (towards an opposite side to the one circumferential end portion 12).

Then, the pair of first engaging projections 17, 17 (the first engaging recess portion 18) are brought into recess and projection engagement with the pair of second engaging recess portions 20, 20 (the second engaging projection portion 19). With the first engaging projections (the first engaging recess portion) kept in recess and projection engagement with the second engaging recess portions (the second engaging projection portion), the pair of first engaging projections 17, 17 is in axial engagement with the second engaging projection 19 to thereby restrict an axial relative displacement between the one circumferential end portion 12 and the other circumferential end portion 13 of the retainer 7a.

In the case of the retainer 7a having the configuration described above, the width of the discontinued portion 11 can be expanded in the circumferential direction by elastically deforming the retainer 7a. Because of this, the width of the discontinued portion 11 is expanded wider than the outside diametric dimension of the shaft such as a rotational shaft on to which the retainer 7a is assembled, whereby the retainer 7a can be assembled around the circumference of the shaft in such a way that the shaft can pass through the discontinued portion 11. Alternatively, the bore dimension of the retainer 7a is elastically expanded to such an extent that the retainer 7a can ride over the obstacle, whereby the retainer 7a can be moved axially over the circumference of the shaft to be assembled therearound in a predetermined position.

In the case of the retainer 7a having the configuration described above, however, a circumferential distance between one circumferential end pocket 21 and the other circumferential end pocket 22 in the pockets 10, 10, across the discontinued portion 11 becomes larger than a circumferential distance between any two adjacent pockets 10, 10 at the other portions. Because of this, when rollers 6 that are disposed in the one circumferential end pocket 21 and the other circumferential end pocket 22 (refer to Fig. 6) enter a loaded area during operation, there may be a possibility that a surface contact pressure at rolling contact portions between rolling surfaces of the rollers 6 and outer ring and inner ring raceways 3, 5 (refer to Fig. 6) is increased excessively.

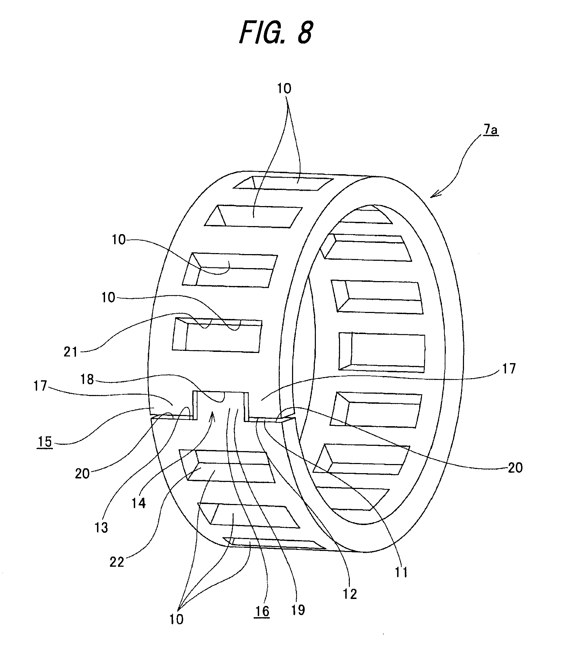

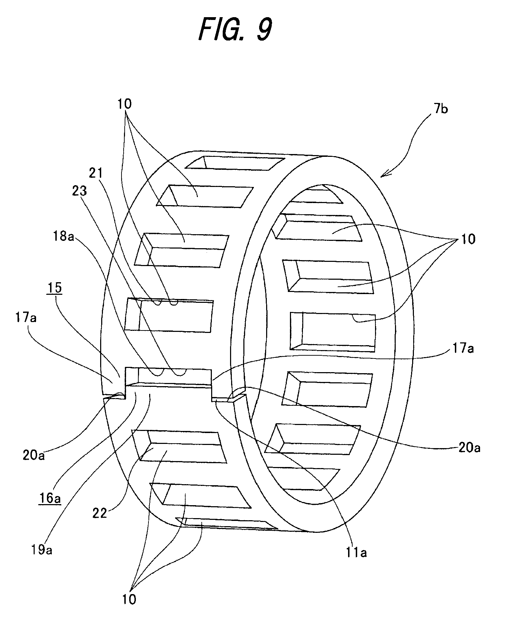

Then, Patent Document 1 describes a retainer 7b as shown in Fig. 9. In this retainer 7b, as in the construction of the retainer 7a shown in Fig. 8, a first engaging recess portion 18a (a pair of first engaging projections 17a, 17a) that makes up a first recess and projection portion 15a is brought into recess and projection engagement with a second engaging projecting portion 19a (a pair of second engaging recess portions 20a, 20a) that makes up a second recess and projection portion 16a. Additionally, in the case of this retainer 7b, with the first engaging recess portion 18a kept in recess and projection engagement with the second engaging projecting portion 19a, an engagement portion side pocket 23 where to retain therein a roller (not shown) in a freely rolling fashion is provided in a portion that is surrounded around four sides by a deep portion of an inner surface of the first engaging recess portion 18a and a distal end face of the second engaging projecting portion 19a. Consequently, in an inner surface of the engagement portion side pocket 23 configured as described above, abutment portions between axial side surfaces of the inner surface of the first engaging recess portion 18a and axial end edges of the distal end face of the second engaging projecting portion 19a are discontinued.

In the case of the retainer 7b described above, the engagement portion side pocket 23 is provided in the circumferential portion including the discontinued portion 11a that is present between the one circumferential end pocket 21 and the other circumferential end pocket 22 (when the one circumferential end pocket 21 and the other circumferential end pocket 22 are referred to, the engagement portion side pocket is excluded) with the first engaging recess portion 18a and the second engaging projecting portion 19a combined together. Because of this, although the circumferential distance including the discontinued portion 11 that is present between the one circumferential end pocket 21 and the other circumferential end pocket 22 of the retainer 7a (refer to Fig. 8) described above becomes remarkably larger than the circumferential distance between any two adjacent pockets 10, 10 at the other portions, there exist no such portion in the retainer 7b. Consequently, there exists no such portion as the rolling contact portions between the rolling surfaces of the rollers 6 and the outer ring and inner ring raceways 3, 5 where the surface contact pressure is increased excessively compared with the other portions. However, although the axial displacement of the one end portion and the other end portion of the retainer 7b is restricted by the engagement of the first recess and projection portion 15a with the second recess and projection portion 16a, no circumferential displacement is restricted. Because of this, in case the retainer 7b is elastically deformed to thereby be expanded diametrically, as the engaged state between the first engaging recess portion 18a and the second engaging projecting portion 19a changes, the circumferential width of the engagement portion side pocket 23 is expanded or the like, resulting in a possibility that the roller cannot be retained stably within the engagement portion side pocket 23.

Additionally, the circumferential dimension (thickness) of the portion of the other circumferential end portion of the retainer 7b where the second engaging projecting portion 19a is present becomes particularly large. So-called warping (deformation) tends to be generated at a portion whose circumferential dimension (thickness) is larger (uneven) than the other portions during injection molding.

### RELATED ART REFERENCE

### PATENT DOCUMENT

Patent Document 1: JP-A-2005-233316

### SUMMARY OF THE INVENTION

### PROBLEMS TO BE SOLVED BY THE INVENTION

In view of the situations described above, the invention has been made to realize, in a radial roller bearing retainer having a discontinued portion at, at least, one location in a circumferential direction in which end portions that are provided so as to face each other across the discontinued portion are brought into engagement with each other by the engagement portion, a construction in which when rollers that are disposed in pockets that face circumferentially each other across the engagement portion enter a loaded area, surface contact pressures of rolling contact portions between rolling surfaces of the rollers and outer ring and inner ring raceways are prevented from being increased excessively and a roller can be retained stably in an engagement portion side pocket that is provided in a projecting portion that makes up the engagement portion.

### MEANS FOR SOLVING THE PROBLEMS

A radial roller bearing retainer of the invention has a discontinued portion at, at least, one location in a circumferential direction and includes a plurality of rim portions, a plurality of pillar portions, a plurality of pockets and an engagement portion.

In these constituent members, the rim portions each have a segmental ring shape and are provided coaxially so as to be spaced apart from each other in an axial direction.

Additionally, the pillar portions are provided intermittently along the circumferential direction so as to be stretched between the rim portions.

In addition, the pockets are each provided in a portion that is surrounded around four sides by the rim portions that lie adjacent in the axial direction and the pillar portions that lie adjacent in the circumferential direction.

Further, the engagement portion is adapted to bring end portions that are provided to face each other across the discontinued portion into engagement with each other so that no relative displacement of the end portions in at least one axial direction is possible.

In particular, in the radial roller bearing retainer of the invention, the engagement portion brings a first engaging projecting portion that is provided on one end portion of the end portions that are provided so as to face each other across the discontinued portion so as to extend in a circumferential direction and a second engaging projecting portion that is provided on the other end portion so as to extend in a circumferential direction into engagement with each other in the axial direction. Additionally, an engagement portion side pocket is formed in at least one projecting portion of the first engaging projecting portion and the second engaging projecting portion so as to penetrate the projecting portion radially. The position where to form the engagement portion side pocket includes a state in which part of the engagement portion side pocket is disposed on the first and second engaging projecting portions with the other portion lying out of the first and second engaging projecting portions.

### ADVANTAGE OF THE INVENTION

According to the radial roller bearing retainer of the invention that is configured as described above, when the rollers disposed in the one circumferential end pocket and the other circumferential end pocket enter a loaded area during operation, the surface contact pressures at the rolling contact portions between the rolling surfaces of the rollers and the outer ring and inner ring raceways can be prevented from being increased excessively. Additionally, the roller can be retained stably within the engagement portion side pocket that is provided in the engagement portion.

First of all, the rollers disposed in the one circumferential end pocket and the other circumferential end pocket enter the loaded area, the surface contact pressures at the rolling contact portions between the rolling surfaces of the rollers and the outer ring and inner ring raceways can be prevented from being increased excessively. The reason that this is possible is that the engagement portion side pocket is formed in at least one projecting portion of the first engaging projecting portion and the second engaging projecting portion that make up the engagement portion so as to penetrate the projecting portion radially. Namely, although in the retainer 7a with the conventional construction shown in Fig. 8, the circumferential distance including the discontinued portion 11 between the one circumferential end pocket 21 and the other circumferential end pocket 22 becomes remarkably large compared with the circumferential distances between the adjacent pockets at the other portions, this can be prevented from occurring in the radial roller bearing retainer of the invention. As a result, the surface contact pressures at the rolling contact portions between the rolling surfaces of the rollers retained in the one circumferential end pocket and the other circumferential end pocket and the outer ring and inner ring raceways can be prevented from being increased excessively.

Additionally, the reason that the roller can stably be retained in the engagement portion side pocket provided in the engagement portion is that the engagement portion side pocket is formed in at least one projecting portion of the first engaging projecting portion and the second engaging projecting portion that make up the engagement portion so as to penetrate the projecting portion radially. Namely, in the case of the engagement portion side pocket that the retainer of the invention possesses, the engagement portion side pocket is formed in the same projecting portion, and because of this, the circumferential width dimension never changes. Consequently, the roller can stably be retained within the engagement portion side pocket, even though the engaged state at the engagement portion changes.

Further, when forming the radial roller bearing retainer to which the invention is applied through injection molding, it is possible to prevent the generation of warping (deformation) in the engagement portion. Namely, in the case of this invention, the engagement portion side pocket (the through hole) is formed in at least one projecting portion of the first engaging projecting portion and the other engaging projecting portion that make up the engagement portion so as to penetrate the projecting portion radially. Because of this, no such situation is present that the circumferential dimensions (thicknesses) of the first and second engaging projecting portions become particularly large. As a result of this, portions where the circumferential dimension (thickness) becomes uneven are reduced, and the generation of so-called warping (deformation) in the engagement portion can be restricted during injection molding.

### BRIEF DESCRIPTION OF THE DRAWINGS

Fig. 1 is a perspective view showing a first embodiment of the invention.
Fig. 2 is a perspective view showing a second embodiment of the invention.
Fig. 3 is a perspective view showing a third embodiment of the invention.
Fig. 4 is a perspective view showing a fourth embodiment of the invention.
Fig. 5 is a perspective view showing a fifth embodiment of the invention.
Fig. 6 is a sectional view of a rotational support portion in which a radial roller bearing including a case is incorporated.
Fig. 7 is a view showing a circumferential portion of a retainer of a first embodiment of a conventional construction as seen radially from an outside thereof.
Fig. 8 is a perspective view of radial roller bearing retainer of a second embodiment of the conventional construction.
Fig. 9 is a view similar to Fig. 8, showing a third embodiment of the conventional construction.

### MODES FOR CARRYING OUT THE INVENTION

### [First Embodiment]

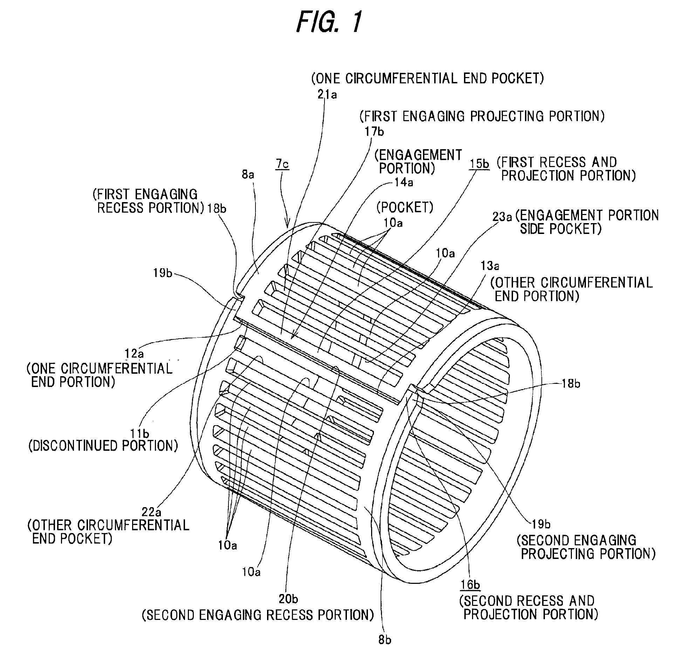

Fig. 1 shows a first embodiment of the invention. The invention relates to a radial roller bearing retainer 7c that has a discontinued portion 11b at, at least, one location in a circumferential direction and in which end portions (one circumferential end portion 12a, the other circumferential end portion 13a) that are provided so as to face each other across the discontinued portion 11b are brought into engagement with each other by an engagement portion 14a and is characterized in that the construction of the engagement portion 14a is devised. The other constructions of the radial roller bearing retainer are almost similar to the constructions of conventionally known radial roller bearing retainers including the conventional constructions shown in Figs. 6 to 9. Thus, the description of portions that are configured conventionally will be omitted, and hereinafter, characteristics of the first embodiment will mainly be described.

The radial roller bearing retainer 7c of this embodiment has a discontinued portion 11b at one location in a circumferential direction. Additionally, the one circumferential end portion 12a and the other circumferential end portion 13a including the discontinued portion 11b between them are in engagement with each other by the engagement portion 14a in such a state that an axial relative displacement between both the end portions 12a, 13a is restricted (substantially prevented). The engagement portion 14a is made up of a first recess and projection portion 15b that is formed on the one circumferential end portion 12a and a second recess and projection portion 16b that is formed on the other circumferential end portion 13a.

Of the first and second recess and projection portions, the first recess and projection portion 15b is made up, in turn, of a first engaging projecting portion 17b and a pair of first engaging recess portions 18b, 18b. This first engaging projecting portion 17b is formed at a portion extending from an axial intermediate portion of one axial end rib portion 8a to an axial intermediate portion of the other axial end rim portion 8b so as to extend in a circumferential direction (towards the other circumferential end portion 13a). Additionally, the pair of engaging recess portions 18b, 18b are formed at both axial ends of the first engaging projecting portion 17b (positions that hold the first engaging projecting portion 17b axially therebetween) so as to recede in a circumferential direction (in an opposite direction to the other circumferential end portion 13a).

The second recess and projection portion 16b is made up of a pair of second engaging projecting portions 19b, 19b and a second engaging recess portion 20b. In these constituent members, the pair of second engaging projecting portions 19b, 19b are formed individually at a portion that extends from one axial end (a left end in Fig. 1) to an axial intermediate portion of the one axial end rim portion 8a and a portion that extends from an axial intermediate portion to the other axial end of the other axial end rim portion 8b so as to extend in a circumferential direction ((towards the one circumferential end portion 12a). Additionally, the second engaging recess portion 20b is formed in a portion extending from the axial intermediate portion of the one axial end rim portion 8a to the axial intermediate portion of the other axial end rim portion 8b (a portion extending axially between the pair of second engaging projecting portions 19b, 19b) so as to recede in a circumferential direction (in an opposite direction to the one circumferential end portion 12a).

In the case of this embodiment, the first engaging projecting portion 17b (the pair of first engaging recess portions 18b, 18b) that makes up the first recess and projection portion 15b and the second engaging recess portion 20b (the pair of second engaging projecting portions 19b, 19b) that makes up the second recess and projection portion 16b are brought into recess and projection engagement with each other. With these constituent members brought into recess and projection engagement with each other, the first engaging projecting portion 17b is brought into axial engagement with the second engaging projecting portions 19b, 19b to thereby restrict (substantially prevent) the axial relative displacement between the one circumferential end portion 12a and the other circumferential end portion 13a.

Additionally, in the case of this embodiment, an engagement portion side pocket 23a is formed in the first engaging projecting portion 17b in such a way as to penetrate the first engaging projecting portion 17b radially. Namely, in the case of this embodiment, the engagement portion side pocket 23a is formed in the first engaging projecting portion 17b in such a way that the pocket is opened only in both radial sides thereof. This enables an inner surface of the engagement portion side pocket 23a to be continuous throughout four sides without any interruption. Further, in the case of this embodiment, the shape and size of this engagement portion side pocket 23a are the same as those of other pockets 10a, 10a.

In the engagement portion side pocket 23a, a portion on a side facing the first recess and projection portion 15b (occupying on the order of two thirds of a circumferential width dimension of the pocket 23a) is formed in the first engaging projecting portion 17b, and the remaining portion on an opposite side to the side facing the first recess and projection portion 15b (occupying on the order of one thirds of the circumferential width dimension of the pocket 23a) is situated out of the first engaging projecting portion 17b. However, the whole of the engagement portion side pocket 23a can also be formed in the first engaging projecting portion 17b. In the event that the engagement portion side pocket 23a so configured is provided, a circumferential distance (pitch) between the engagement portion side pocket 23a and the one circumferential end pocket 21a or the other circumferential end pocket 22a that lies adjacent in the circumferential direction is preferably almost the same as a circumferential distance (pitch) between any two circumferentially adjacent pockets 10a, 10a at the other portions.

In the case of this embodiment, the circumferential distance between the engagement portion side pocket 23a and the one circumferential end pocket 21a is equal to the circumferential distance between any two circumferentially adjacent pockets 10a, 10a at the other portions. On the other hand, the circumferential distance including the discontinued portion 11b between the engagement portion side pocket 23a and the other circumferential end pocket 22a is slightly larger than the circumferential distance between any two circumferentially adjacent pockets 10a, 10a at the other portions. Further, as to a roller dislocation preventive construction, a so-called snap clamping or the like can be adopted in which a circumferential distance of the opening portions at both the radial sides of the pockets 10a, 10a and the engagement portion side pocket 23a is slightly smaller than a diameter of each of rollers that are disposed inside the pockets 10a, 23a. In the event that such a clamping construction is adopted, either of the opening portions at the radial sides of the pockets 10a, 23a is expanded in the circumferential direction by elastically deforming the same so that rollers are incorporated in the pockets 10a, 23a.

According to the radial roller bearing retainer 7c of this embodiment that is configured as described heretofore, when rollers 6 (refer to Fig. 6) that are disposed inside the one circumferential end pocket 21a and the other circumferential end pocket 22a enter a loaded area during operation, surface contact pressures at rolling contact portions between rolling surfaces the rollers 6 and outer ring and inner ring raceways 3, 5 (refer to Fig. 6) are prevented from being increased excessively, and additionally, the roller can be retained stably in the engagement portion side pocket 23a that is provided in the engagement portion 14a.

First of all, when the rollers 6 that are disposed inside the one circumferential end pocket 21a and the other circumferential end pocket 22a inter the loaded area, the surface contact pressures at the rolling contact portions between the rolling surfaces the rollers 6 and the outer ring and inner ring raceways 3, 5 are prevented from being increased excessively. The reason that this is possible is that the engagement portion side pocket 23a is formed in the first engaging projecting portion 17b that makes up the engagement portion 14a in such a way as to penetrate the first engaging projecting portion 17b. Namely, although in the retainer 7a with the conventional construction shown in Fig. 8, the circumferential distance including the discontinued portion 11 between the one circumferential end pocket 21 and the other circumferential end pocket 22 becomes remarkably large compared with the circumferential distances between the adjacent pockets 10, 10 at the other portions, this can be prevented from occurring in the radial roller bearing retainer 7c of the invention, by providing such the engagement portion side pocket 23a. As a result, the surface contact pressures at the rolling contact portions between the rolling surfaces of the rollers 6 retained in the one circumferential end pocket 21a and the other circumferential end pocket 22a and the outer ring and inner ring raceways 3, 5 can be prevented from being increased excessively.

Additionally, the reason that the roller can stably be retained in the engagement portion side pocket 23a provided in the engagement portion 14a is that the engagement portion side pocket23a is formed in the first engaging projecting portion 17b that makes up the engagement portion 14a so as to penetrate the first engaging projecting portion 17b radially. Namely, in the case of the engagement portion side pocket 23a that the retainer 7c of this embodiment possesses, the inner surface is continuous around the four sides without any interruption. Because of this, the circumferential width of the engagement portion side pocket 23a never changes, even though the engaged state of the engagement portion 14a changes. As a result of this, the roller can stably be retained within the engagement portion side pocket 23a.

Further, when forming the radial roller bearing retainer 7c of this embodiment through injection molding, it is possible to restrict the generation of warping (deformation) of the first recess and projection portion 15b that makes up the engagement portion 14a. Namely, in the case of this embodiment, the engagement portion side pocket 23a (the through hole) is formed in the first engaging projecting portion 17b that makes up the engagement portion 14a. Because of this, no such situation is present that the circumferential dimension (thickness) of the first engaging projecting portion 17b becomes remarkably large compared with the dimensions of the other portions. As a result of this, the generation of so-called warping (deformation) in the first recess and projection portion 15b can be restricted during injection molding.

### [Second Embodiment]

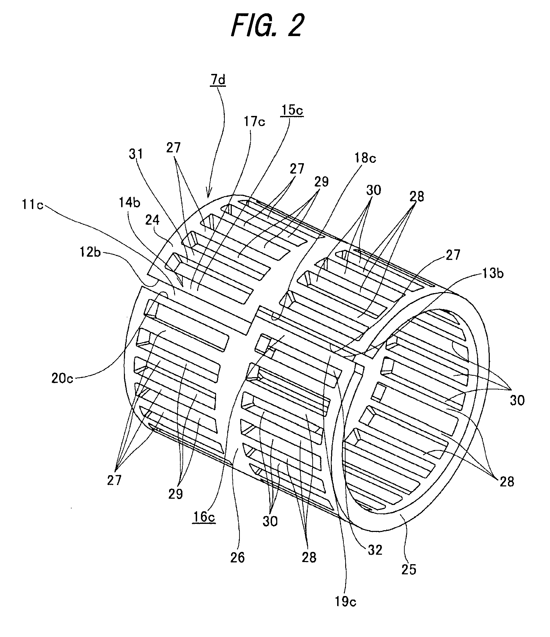

Fig. 2 shows a second embodiment of the invention. A radial roller bearing retainer 7d of this embodiment is intended to retain rollers 6 that are arranged in a plurality of rows (refer to Fig. 6) so as to roll freely therein. This retainer 7d includes one axial end rim portion 24, the other axial end rim portion 25 and a central rim portion 26 that is provided at an axial central portion between the one axial end rim portion 24 and the other axial end rim portion 25, these rim portions being disposed coaxially so as to be spaced apart one another in an axial direction.

A plurality of one-side pillar portions 27, 27 are provided intermittently along a circumferential direction so as to be stretched between the one axial end rim portion 24 and the central rim portion 26. Portions that are surrounded four sides by the circumferentially adjacent one-side pillar portions 27, 27 and the one axial end and central rim portions 24, 26 are made as one-side pockets 29, 29 where to retain rollers (whose illustration is omitted) so as to roll freely therein.

Additionally, a plurality of other-side pillar portions 28, 28 are provided intermittently along the circumferential direction so as to be stretched between the other axial end rim portion 25 and the central rim portion 26. Portions that are surrounded four sides by the circumferentially adjacent other-side pillar portions 28, 28 and the other axial end and central rim portions 25, 26 are made as other-side pockets 30, 30 where to retain rollers so as to roll freely therein. In addition, in the case of this embodiment, the one-side pockets 29, 29 and the other-side pockets 30, 30 are offset circumferentially by a half of a pitch at which the pockets are provided in relation to their circumferential positions.

Similar to that of the first embodiment described above, the retainer 7d of this embodiment has a discontinued portion 11c at one location in the circumferential direction. One circumferential end portion 12b and the other circumferential end portion 13b that are provided so as to face each other across the discontinued portion 11c are brought into engagement with each other by an engagement portion 14b in such a way that both the end portions 12b, 13b are prevented from being displaced relatively in one axial direction (in a direction in which the one circumferential end portion 12b and the other circumferential end portion 13b approach each other in the axial direction). The engagement portion 14b is made up of a first recess and projection portion 15c that is formed on the one axial end portion 12b and a second recess and projection portion 16c that is formed on the other circumferential end portion 13b.

Of these recess and projection portions, the first recess and projection portion 15c is made up, in turn, of a first engaging projecting portion 17c and a first engaging recess portion 18c. This first engaging projecting portion 17c is formed at a portion that extends from one axial end (a left end in Fig. 2) of the retainer 7d to an axial central portion of the central rim portion 26 so as to extend in a circumferential direction (towards the other circumferential end portion 13b). On the other hand, the first engaging recess portion 18c is formed at a portion that extends from the axial central portion of the central rim portion 26 to the other axial end (a right end in Fig. 2) of the retainer 7d so as to recede in a circumferential direction (in an opposite direction to the other circumferential end portion 13b).

In addition, the second recess and projection portion 16c is made up of a second engaging projecting portion 19c and a second engaging recess portion 20c. Of these engaging portions, the second engaging projecting portion 19c is formed at a portion that extends from the axial central portion of the central rim portion 26 of the retainer 7d to the other axial end of the retainer 7d so as to extend in a circumferential direction (towards the one circumferential end portion 12b). On the other hand, the second engaging recess portion 20c is formed at a portion that extends from the one axial end of the retainer 7d to the axial central portion of the central rim portion 26 so as to recede in a circumferential direction (in an opposite direction to the one circumferential end portion 12b).

In the case of this embodiment, the first engaging projecting portion 17c (the first engaging recess portion 18c) that makes up the first recess and projection portion 15c and the second engaging recess portion 20c (the second engaging projecting portion 19c) that makes up the second recess and projection portion 16c are brought into recess and projection engagement with each other. With these engaging portions kept in recess and projection engagement with each other, the first engaging projecting portion 17c is in axial engagement with the second engaging portion 19c, whereby the one circumferential end portion 12b and the other circumferential end portion 13b are prevented from being displaced relatively in the axial direction (the direction in which the one circumferential end portion 12b and the other circumferential end portion 13b approach each other in the axial direction).

In the case of this embodiment, one engagement portion side pocket 31 is formed in the first engaging projecting portion 17c so as to penetrate this first engaging projecting portion 17c. Namely, in the case of this embodiment, too, this one engagement portion side pocket 31 is formed in the first engaging projecting portion 17c so as to be opened only at radial sides thereof. Because of this, an inner surface of the one engagement portion side pocket 31 is continuous around four sides without any interruption. Further, in the case of this embodiment, the shape and size of this one engagement portion side pocket 31 are the same as those of the other one-side pockets 29, 29. In this one engagement portion side pocket 31, a half portion that is present on a side facing the first recess and projection portion 15c is formed in the first engaging projecting portion 17c, and an opposite half portion to the first recess and projection portion 15c is formed in a position lying out of the first engaging projecting portion 17c. However, the whole of the one engagement portion side pocket can also be formed in the first engaging projecting portion 17c.

In the case of this embodiment, the other engagement portion side pocket 32 is also formed in the second engaging projecting portion 19c so as to penetrate this second engaging projecting portion 19c radially. Namely, the other engagement portion side pocket 32 is also formed in the second engaging projecting portion 19c so as to be opened only at radial sides thereof. Because of this, an inner surface of the other engagement portion side pocket 32 is continuous around four sides without any interruption. Further, the shape and size of the other engagement portion side pocket 32 are the same as those of the other-side pockets 30, 30. In this other engagement portion side pocket 32, a half portion that is present on a side facing the second recess and projection portion 16c is formed in the second engaging projecting portion 19c, and an opposite half portion to the second recess and projection portion 16c is formed in a position lying out of the second engaging projecting portion 19c. However, the whole of the other engagement portion side pocket can also be formed in the second engaging projecting portion 19c. The other configurations and working effects of this embodiment are almost similar to those of the first embodiment described previously.

### [Third Embodiment]

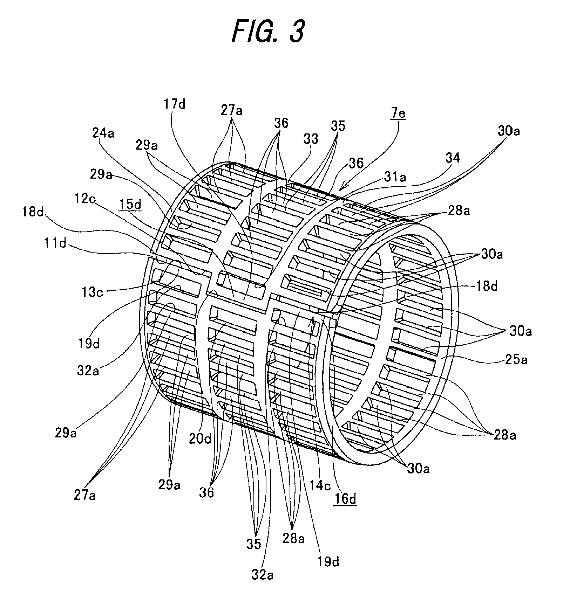

Fig. 3 shows a third embodiment of the invention. A radial roller bearing retainer 7e of this embodiment is intended to retain rollers that are arranged in three rows (whose illustration is omitted) so as to roll freely therein. This retainer 7e includes one axial end rim portion 24a, the other axial end rim portion 25a, and one axial end side intermediate rim portion 33 and the other axial end side intermediate rim portion 34 that are provided at axial portions between the one axial end rim portion 24a and the other axial end rim portion 25a, these rim portions being disposed coaxially so as to be spaced apart one another in an axial direction. A plurality of one-side pillar portions 27a, 27a are provided intermittently along a circumferential direction so as to be stretched between the one axial end rim portion 24a and the one axial end side intermediate rim portion 33. Portions that are surrounded four sides by the circumferentially adjacent one-side pillar portions 27a, 27a and the one axial end and one axial end side intermediate rim portions 24a, 33 are made as one-side pockets 29a, 29a where to retain rollers so as to roll freely therein.

Additionally, a plurality of center-side pillar portions 35, 35 are provided intermittently along the circumferential direction so as to be stretched between the one axial end side intermediate rim portion 33 and the other axial end side rim portion 34. Portions that are surrounded four sides by the circumferentially adjacent center-side pillar portions 35, 35 and the one axial end side and the other axial end side rim portions 33, 34 are made as center-side pockets 36, 36 where to retain rollers so as to roll freely therein.

In addition, a plurality of other-side pillar portions 28a, 28a are provided intermittently along the circumferential direction so as to be stretched between the other axial end side intermediate rim portion 34 and the other end rim portion 25a. Portions that are surrounded four sides by the circumferentially adjacent other-side pillar portions 28a, 28a and the other axial end side intermediate rim portion 34 and the other axial rim portion 25a are made as other-side pockets 30a, 30a where to retain rollers so as to roll freely therein. In addition, in the case of this embodiment, the one-side, center-side and other-side pockets 29a, 36, 30a are aligned with one another in relation to their circumferential positions.

Similar to that of the embodiments described above, the retainer 7e of this embodiment also has a discontinued portion 11d at one location in the circumferential direction. One circumferential end portion 12c and the other circumferential end portion 13c that are provided so as to face each other across the discontinued portion 11d are brought into engagement with each other by an engagement portion 14c in such a way that both the end portions 12c, 13c are substantially prevented from being displaced relatively in the axial direction. The engagement portion 14c is made up of a first recess and projection portion 15d that is formed on the one axial end portion 12c and a second recess and projection portion 16d that is formed on the other circumferential end portion 13c.

Of these recess and projection portions, the first recess and projection portion 15d is made up, in turn, of a first engaging projecting portion 17d and a pair of first engaging recess portions 18d, 18d. This first engaging projecting portion 17d is formed at a portion that extends from an axial intermediate portion of the one axial end side intermediate rim portion 33 to an axial intermediate portion of the other axial end side intermediate rim portion 34 so as to extend in a circumferential direction (towards the other circumferential end portion 13c). Additionally, of the pair of first engaging recess portions 18d, 18d, a first engaging recess portion 18d lying closer to the one axial end (a left side in Fig. 3) is formed at a portion that extends from the one axial end portion of the retainer 7e to the axial intermediate portion of the one axial end side intermediate rim portion 33 (a portion lying closer to the one axial end of the retainer 7e than the first engaging projecting portion 17d) so as to recede in a circumferential direction (in an opposite direction to the other circumferential end portion 13c). In addition, of the pair of engaging recess portions 18d, 18d, the other first engaging recess portion 18d lying closer to the other axial end (a right side in Fig. 3) is formed at a portion that extends from the axial intermediate portion of the other axial end side intermediate rim portion 34 to the other axial end portion of the retainer 7e (a portion lying closer to the other axial end of the retainer 7e than the first engaging projecting portion 17d) so as to recede in the circumferential direction (in the opposite direction to the other circumferential end portion 13c).

In addition, the second recess and projection portion 16d is made up of a pair of second engaging projecting portions 19d, 19d and a second engaging recess portion 20d. Of the pair of second engaging projecting portions 19d, 19d, a second engaging projecting portion 19d lying closer to the one axial end (a left side in Fig. 3) is formed at a portion that extends from the one axial end portion of the retainer 7e to the axial intermediate portion of the one axial end side intermediate rim portion 33 so as to project in a circumferential direction (towards the one circumferential end portion 12c). Of the pair of second engaging projecting portions 19d, 19d, the other second engaging projecting portion 19d lying closer to the other axial end (a right side in Fig. 3) is formed at a portion that extends from the axial intermediate portion of the other axial end side intermediate rim portion 34 to the other axial end portion of the retainer 7e so as to project in the circumferential direction (towards the one circumferential end portion 12c). Additionally, the second engaging recess portion 20d is formed at a portion that extends from the axial intermediate portion of the one axial end side intermediate rim portion 33 to the axial intermediate portion of the other axial end side intermediate rim portion 34 (an axial portion between the pair of second engaging projecting portions 19d, 19d) so as to recede in a circumferential direction (in an opposite direction to the one circumferential end portion 12c).

In the case of this embodiment, the first engaging projecting portion 17d (the pair of first engaging recess portions 18d, 18d) that makes up the first recess and projection portion 15d and the second engaging recess portion 20d (the pair of second engaging projecting portions 19d, 19d) that makes up the second recess and projection portion 16d are brought into recess and projection engagement with each other. With these engaging portions kept in recess and projection engagement with each other, the first engaging projecting portion 17d is in axial engagement with the pair of second engaging portions 19d, 19d, whereby the one circumferential end portion 12c and the other circumferential end portion 13d are substantially prevented from being displaced relatively in the axial direction.

In the case of this embodiment, one engagement portion side pocket 31a is formed in the first engaging projecting portion 17d so as to penetrate this first engaging projecting portion 17d. Namely, in the case of this embodiment, too, this one engagement portion side pocket 31a is formed in the first engaging projecting portion 17d so as to be opened only at radial sides thereof. Because of this, an inner surface of the one engagement portion side pocket 31a is continuous around four sides without any interruption. Further, in the case of this embodiment, the shape and size of this one engagement portion side pocket 31a are the same as those of the other center-side pockets 36, 36. In this one engagement portion side pocket 31a, a portion that is present on a side facing the first recess and projection portion 15d (occupying on the order of two thirds of the circumferential width dimension of the pocket 31 a)is formed in the first engaging projecting portion 17d, and a portion on a side opposite to the first recess and projection portion 15d (occupying on the order of one thirds of the circumferential width dimension of the pocket 31a) is formed in a position lying out of the first engaging projecting portion 17d. However, the whole of the one engagement portion side pocket 31a can also be formed in the first engaging projecting portion 17d.

In the case of this embodiment, the other engagement portion side pockets 32a, 32a are formed individually in the pair of second engaging projecting portions 19d, 19d so as to penetrate the pair of second engaging projecting portions 19d, 19d. Namely, the pair of other engagement portion side pockets 32a, 32a are also formed in the pair of second engaging projecting portions 19d, 19d so as to be opened only at radial sides thereof. Because of this, inner surfaced of the pair of other engagement portion side pockets 32a, 32a are continuous around four sides without any interruption. Further, the shape and size of the pair of other engagement portion side pockets 32a, 32a are the same as those of the one-side and other-side pockets 29a, 30a. In the pair of other engagement portion side pockets 32a, 32a, half portions that are present on a side facing the second recess and projection portion 16d are formed in the pair of second engaging projecting portions 19d,19d, and opposite half portions to the second recess and projection portion 16d are formed in positions lying out of the pair of second engaging projecting portions 19d, 19d. However, the whole of the other engagement portion side pockets 32a, 32a can also be formed in the pair of second engaging projecting portions 19d, 19d. The other configurations and working effects of this embodiment are almost similar to those of the first embodiment described previously.

### [Fourth Embodiment]

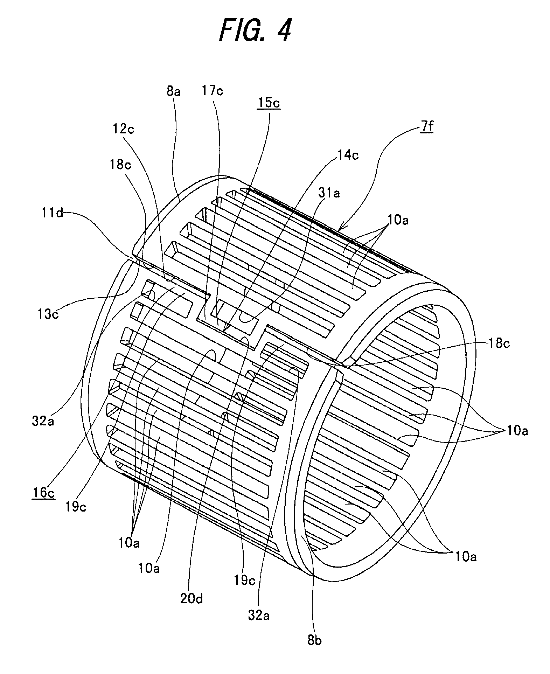

Fig. 4 shows a fourth embodiment of the invention. A radial roller bearing retainer 7f has a construction like one in which the engagement portion 14c of the retainer 7e of the third embodiment shown in Fig. 3 is adopted in place of the engagement portion 14a of the retainer 7c of the first embodiment shown in Fig. 1. Because of this, in the case of this embodiment, an axial dimension of one engagement portion side pocket 31a that is formed in a first engaging projecting portion 17c of a first recess and projection portion 15c that makes up an engagement portion 14c is reduced to one thirds or less of an axial dimension of pockets 10a, 10a of the retainer 7f. Similarly, an axial dimension of a pair of other engagement portion 14c side pockets 32a, 32a formed individually in a pair of second engaging projecting portions 19c of a second recess and projection portion 16c that make is reduced to one thirds or less of the axial dimension of the pockets 10a, 10a of the retainer 7f.

This embodiment shows the construction of the retainer in which the shape of the one and other engagement portion side pockets 31a, 32a that are formed in the engagement portion 14c is different from the shape of the pockets 10a, 10a of the retainer 7f. In addition to the construction of the retainer 7f of this embodiment, a construction can also be adopted in which the construction (the double-row construction) of the retainer 7d of the second embodiment excluding the construction of the engagement portion is combined with the construction of the engagement portion 14c of the retainer 7f of this embodiment. In this way, including the construction of this embodiment, the constructions of the embodiments described heretofore excluding the engagement portions and the constructions of the engagement portions can also be combined as required in carrying out the invention. The other configurations and working effects of this embodiment are almost similar to those of the first embodiment described previously.

### [Fifth Embodiment]

Fig. 5 shows a fifth embodiment of the invention. In a radial roller bearing retainer 7g of this embodiment, compared with the retainer 7f of the fourth embodiment described above, an axial dimension of a first engaging projecting portion 17d of a first recess and projection portion 15d that makes up an engagement portion 14d is reduced, while an axial dimension of a pair of first engaging recess portions 18d, 18d is increased. On the other hand, compared with the retainer 7f of the fourth embodiment described above, an axial dimension of a pair of second engaging projecting portions 19d, 19d of a second recess and projection portion 16d that makes up the engagement portion 14d is increased, while an axial dimension of a second engaging recess portion 20d is reduced.

Because of this, no one engagement portion side pocket is formed in the first engaging projecting portion 17d. However, a through hole (in which a roller may or may not be disposed) can be provided in this first engaging projecting portion 17d. Other engagement portion side pockets 32b, 32b are formed individually in the pair of second engaging projecting portions 19d, 19d so as to penetrate the pair of second engaging projecting portions 19d, 19d radially. An axial dimension of the pair of other engagement portion side pockets 32b, 32b is larger than the axial dimension of the other engagement portion side pockets 32a, 32a of the fourth embodiment described above. The other configurations and working effects of this embodiment are almost similar to those of the fourth embodiment described above.

This patent application is based on Japanese Patent Application No. 2012-153871 filed on July 9, 2012, the contents of which are incorporated herein by reference.

### Industrial Applicability

In the embodiments that have been described above, the retainer is described as having the discontinued portion at one location in the circumferential direction. However, the invention is also applied to the construction of a retainer having a discontinued portion at a plurality of locations in the circumferential direction (a so-called split retainer in which circumferential end edges of a plurality of partially cylindrical retainer elements are brought into engagement with each other).

In addition, in the embodiments described above, the through holes formed in the first and second projecting portions that make up the engagement portion are made as the pockets (used to retain the rollers therein). However, whether or not the through holes formed in the first and second projecting portions are made as the pockets is only a matter of applications, and hence, both the cases belong to the technical scope of the invention.

### DESCRIPTION OF REFERENCE NUMERALS AND SIGNS

- 1: radial roller bearing;
- 2: radially outer member;
- 3: outer ring raceway;
- 4: shaft;
- 5: inner ring raceway;
- 6: roller;
- 7, 7a, 7b, 7c, 7d, 7e, 7f, 7g: retainer;
- 8a, 8b: rim portion;
- 9: pillar portion;
- 10, 10a: pocket;
- 11, 11a, 11b, 11c, 11d: discontinued portion;
- 12, 12a, 12b, 12c: one circumferential end portion;
- 13, 13a, 13b, 13c: other circumferential end portion;
- 14, 14a, 14b, 14c, 14d: engagement portion;
- 15, 15a, 15b, 15c, 15d: first recess and projection portion;
- 16, 16a, 16b, 16c, 16d: second recess and projection portion;
- 17, 17a, 17b, 17c, 17d: first engaging projecting portion;
- 18, 18a, 18b, 18c, 18d: first engaging recess portion;
- 19, 19a, 19b, 19c, 19d: second engaging projecting portion;
- 20, 20a, 20b, 20c, 20d: second engaging recess portion;
- 21, 21a: one circumferential end pocket;
- 22, 22a: other circumferential end pocket;
- 23, 23a: engagement portion side pocket;
- 24, 24a: one axial end rim portion;
- 25, 25a: other axial end rim portion;
- 26: central rim portion;
- 27, 27a: one-side pillar portion;
- 28, 28a: other-side rim portion;
- 29, 29a: one-side pocket;
- 30, 30a: other-side pocket;
- 31, 31a, 31b: one engagement portion side pocket;
- 32, 32a, 32b: other engagement portion side pocket;
- 33: one axial end side intermediate rim portion;
- 34: other axial end side rim portion;
- 35: center-side pillar portion;
- 36: center-side pocket.

## Claims

1. A radial roller bearing retainer comprising:
a discontinued portion at, at least, one location in a circumferential direction;
a plurality of rim portions; a plurality of pillar portions; a plurality of pockets; and an engagement portion,
in these constituent members, the rim portions each having a segmental ring shape and being provided coaxially so as to be spaced apart from each other in an axial direction,
the pillar portions being provided intermittently along the circumferential direction so as to be stretched between the rim portions,
the pockets being each provided in a portion that is surrounded around four sides by the rim portions that lie adjacent in the axial direction and the pillar portions that lie adjacent in the circumferential direction,
the engagement portion being adapted to bring end portions that are provided to face each other across the discontinued portion into engagement with each other so that a relative displacement of the end portions in at least one axial direction is prevented, the radial roller bearing retainer being, wherein
the engagement portion brings a first engaging projecting portion that is provided on one end portion of the end portions that are provided so as to face each other across the discontinued portion so as to extend in a circumferential direction and a second engaging projecting portion that is provided on the other end portion so as to extend in a circumferential direction into engagement with each other in the axial direction, and an engagement portion side pocket is formed in at least one projecting portion of the first engaging projecting portion and the second engaging projecting portion so as to penetrate the projecting portion radially.

## Amended claims

### Amended claims under Art. 19.1 PCT

1. A radial roller bearing retainer comprising:
a discontinued portion at, at least, one location in a circumferential direction;
a plurality of rim portions; a plurality of pillar portions; a plurality of pockets; and an engagement portion,
in these constituent members, the rim portions each having a segmental ring shape and being provided coaxially so as to be spaced apart from each other in an axial direction,
the pillar portions being provided intermittently along the circumferential direction so as to be stretched between the rim portions,
the pockets being each provided in a portion that is surrounded around four sides by the rim portions that lie adjacent in the axial direction and the pillar portions that lie adjacent in the circumferential direction,
the engagement portion being adapted to bring end portions that are provided to face each other across the discontinued portion into engagement with each other so that a relative displacement of the end portions in at least one axial direction is prevented, the radial roller bearing retainer being, wherein:
the engagement portion brings a first engaging projecting portion that is provided on one end portion of the end portions that are provided so as to face each other across the discontinued portion so as to extend in a circumferential direction and a second engaging projecting portion that is provided on the other end portion so as to extend in a circumferential direction into engagement with each other in the axial direction, and an engagement portion side pocket is formed in at least one projecting portion of the first engaging projecting portion and the second engaging projecting portion so as to penetrate the projecting portion radially;
the engagement portion side pocket is opened only at radial sides thereof; and
an inner surface of the engagement portion side pocket is continuous around four sides without any interruption.
